# EUROPEAN PATENT APPLICATION

(11) **EP 3 561 853 A1**
(43) Date of publication of application: **30.10.2019**
(21) Application number: 18169513.1
(22) Date of filing: 26.04.2018
(51) Int. Cl.: H01J 49/06, G01N 27/62

(54) **ION GUIDE ASSEMBLY**

(71) Applicant: Tofwerk AG, 3600 Thun (CH)
(72) Inventor: Stoermer, Carsten, 3604 Thun (CH); Kamrath, Michael, 3012 Bern (CH)
(74) Representative: Keller & Partner Patentanwälte AG

(57) **Abstract**

The invention relates to an ion guide assembly (1) for conveying ions along a conveying path (10) in a conveying direction (20), and to a method for operating this ion guide assembly (1). The ion guide assembly (1) comprises an ion guide (2) having a first end (4.1) and a second end (4.2) being spatially separated from the first end (4.2), for conveying the ions along the conveying path (10) from a first spatial region (5.1) located in an area of the first end (4.1) of the ion guide (2) to a second spatial region (5.2) located in an area of the second end (4.2) of the ion guide (2), wherein the second spatial region (5.1) is spatially separated from the first spatial region (5.1). Thereby, the ion guide (2) comprises at least three conveying electrodes (6.1, ..., 6.11) arranged in a succession of each other along the conveying path (10). The ion guide assembly (1) further comprises a radio frequency AC voltage control circuitry (3) connectable to the at least three conveying electrodes (6.1, ..., 6.11) for supplying each of the at least three conveying electrodes (6.1, ..., 6.11) with a radio frequency AC voltage, wherein for each one of the at least three conveying electrodes (6.2, ..., 6.11) which is succeeding in the succession of the at least three conveying electrodes (6.1, ..., 6.11) a preceding neighbouring conveying electrode (6.1, ..., 6.10) of the at least three conveying electrodes (6.1, ..., 6.11), the radio frequency AC voltage has essentially a same frequency, essentially a same maximum amplitude and a phase decreased by an amount in a range from 10° to 170° as compared to for the respective preceding neighbouring conveying electrode (6.1, ..., 6.10) for generating a radio frequency AC potential wave along the conveying path (10) moving in the conveying direction (20) for conveying the ions along the conveying path (10) in the conveying direction (20).

## Description

### Technical Field

The invention relates to an ion guide assembly for conveying ions along a conveying path in a conveying direction. Furthermore, the invention relates to a method for operating such an ion guide assembly.

### Background Art

Ion guide assemblies according to the technical field initially mentioned and methods for operating these ion guide assemblies are known. US 8,835,839 B1 of Battelle Memorial Institute for example discloses such an ion guide assembly for conveying ions along a conveying path in a conveying direction. This ion guide assembly comprises an ion guide with a pair of substantially parallel surfaces, wherein the conveying path is arranged in a plane between the pair of surfaces. On each of the surfaces, an array of inner electrodes is provided along the conveying path. Radio frequency AC potentials, i.e. potentials that alternate at a radio frequency, are applied to these inner electrodes, wherein for each inner electrode, the radio frequency AC potential is 180° out of phase as compared to the radio frequency AC potential applied to its one or more neighbouring inner electrodes. These radio frequency AC potentials form a repulsive pseudopotential for the ions, preventing the ions from touching the surfaces. These radio frequency AC potentials are superimposed with a DC voltage in order to generate an electric field gradient along the conveying path in order to convey the ions in the conveying direction along the conveying path. In order to keep the ions on the conveying path when being conveyed along the conveying path, additional DC potentials are applied to an array of outer electrodes framing the arrays of inner electrodes along both sides of the arrays of inner electrodes, thus framing the conveying path.

Such ion guide assemblies are for example employed in ion mobility spectrometry. There, ions are pushed by the electric field gradient along the conveying path through a neutral gas in the ion guide. Thereby, each ion travels at a speed which is inverse proportional to the average size of the respective ion. This average size appears because the ions rotate as they travel through the gas. Based on the time it takes a particular ion to travel a known distance in the gas, the average size or collision cross section of the respective ion can be calculated. In case the ion mobilities of two molecular ions having a same charge and having very similar shapes are to be determined however, a very high DC voltage is required in order to separate these two ions. When applying such high DC voltages, electrical arching is likely to occur. Electrical arching however reduces the reliability of the ion transport and thus the reliability of the obtained ion mobility spectra. Furthermore, electrical arching may damage the ion guide assembly. Consequently, the known ion guide assemblies are disadvantageous in case a high resolution is to be achieved in ion mobility spectrometry.

This disadvantage of requiring high DC voltages resulting in an increased likelihood of electrical arching is inherent to this type of ion guide assemblies not only in ion mobility spectrometry but in any case where ions should be conveyed along a conveying path passing an area with a gas pressure like, for example, in cases where ions are to be transferred from a lower to a higher gas pressure or from a higher to a lower gas pressure.

Another example of an ion guide assembly pertaining to the technical field initially mentioned which addresses these problems is disclosed in EP 1 367 633 A2 of Micromass Limited. In this case as well, the ion guide comprises a plurality of electrodes. For conveying the ions along the conveying path however, a sequence of DC voltages is applied to each one of the electrodes. Thus, a DC potential waveform is generated along the conveying path. This DC potential waveform is seen by the ions as a DC potential well which moves in conveying direction along the conveying path. In case such an ion guide assembly is employed in ion mobility spectrometry, the ions ride on or with the travelling DC potential wells that are being translated along the conveying path. Since there is a neutral gas in the ion guide, ions may however be pushed out of a travelling DC potential well by the resistance of the neutral gas. Such ions are then trapped by the succeeding travelling DC potential well. There, the ions may again be pushed out of the travelling DC potential well and again be trapped by the succeeding travelling DC potential well. In such an ion guide assembly, the larger the collision cross section of an ion is, the larger is the probability for the ion to be pushed out of a travelling DC potential well. Consequently, larger ions take longer to traverse a given distance. Therefore, the mobility of the ions can be calculated based on the time they require to traverse a given distance.

Such known ion guide assemblies have the disadvantage that the ion mobility separation is highly dependent on both the depth and speed of the travelling DC potential wells. Consequently, such ion guide assemblies need to be adjusted for different types of ions. Therefore, these ion guide assemblies are not suited for ion mobility spectrometry where a broad spectrum of different ion mobilities is to be detected in one duty cycle. Additionally, these ion guide assemblies have the disadvantage that the ions are not moved along the conveying path during the time they are not trapped in one of the travelling DC potential wells. During these times, the respective ions are exposed to ion-ion repulsion due to the presence of other ions. This ion-ion repulsion however leads to ion diffusion. This is disadvantageous in any case where ions should be conveyed along a conveying path with as small ion diffusion as possible. In the particular case of ion mobility spectrometry, this disadvantage for example limits the accuracy with which the ion mobility can be determined.

Ion-ion repulsion resulting in ion diffusion not only affects ions that are not trapped in one of the travelling DC potential wells. In case too many ions are trapped in the same travelling DC potential well, the ions experience ion-ion repulsion such that some of the ions are pushed out of the respective travelling DC potential well where the ions experience ion diffusion due to the ion-ion repulsion. Thus, such ion guide assemblies cannot convey effectively and reliably large amounts of ions at a same time independent of whether they are employed in ion mobility spectrometry or in other applications.

In summary, the above mentioned known ion guide assemblies have the disadvantage that they do not enable to convey large amounts of ions at a same time very efficiently and reliably along a conveying path in a conveying direction. Either, they require high DC voltages which results in the risk of electrical arching which reduces the reliability of the ion transport or they circumvent high DC voltages for the cost of enabling only the efficient and reliable transport of a very limited number of ions along a conveying path in a conveying direction.

### Summary of the invention

It is the object of the invention to create an ion guide assembly and a method for operating the ion guide assembly pertaining to the technical field initially mentioned, that enable to convey large amounts of ions more efficiently and reliably along a conveying path in a conveying direction.

The solution of the invention is specified by the features of claim 1. According to the invention, the ion guide assembly comprises an ion guide having a first end and a second end being spatially separated from the first end, for conveying the ions along the conveying path from a first spatial region located in an area of the first end of the ion guide to a second spatial region located in an area of the second end of the ion guide, wherein the second spatial region is spatially separated from the first spatial region, wherein the ion guide comprises at least three conveying electrodes arranged in a succession of each other along the conveying path. Furthermore, the ion guide assembly according to the invention comprises a radio frequency AC voltage control circuitry connectable to the at least three conveying electrodes for supplying each of the at least three conveying electrodes with a radio frequency AC voltage, wherein for each one of the at least three conveying electrodes which is succeeding in the succession of the at least three conveying electrodes a preceding neighbouring conveying electrode of the at least three conveying electrodes, the radio frequency AC voltage has essentially a same frequency, essentially a same maximum amplitude and a phase increased by an amount in a range from 10° to 170° as compared to for the respective preceding neighbouring conveying electrode for generating a radio frequency AC potential wave along the conveying path moving in the conveying direction for conveying the ions along the conveying path in the conveying direction.

In a method for operating the ion guide assembly according to the invention, radio frequency AC voltages are supplied by the radio frequency AC voltage control circuitry to each of the at least three conveying electrodes, wherein for each one of the at least three conveying electrodes which is succeeding in the succession of the at least three conveying electrodes a preceding neighbouring conveying electrode of the at least three conveying electrodes, the radio frequency AC voltage has essentially a same frequency, essentially a same maximum amplitude and a phase decreased by an amount in a range from 10° to 170° as compared to the radio frequency AC voltage supplied to the respective preceding neighbouring conveying electrode for generating a radio frequency AC potential wave along the conveying path moving in the conveying direction for conveying the ions along the conveying path in the conveying direction.

The ion guide assembly according to the invention enables conveying ions along the conveying path in the conveying direction. Thereby, the conveying path is a spatial region connecting the first spatial region to the second spatial region, wherein the ions move within the spatial region of the conveying path when being conveyed along the conveying path in the conveying direction from the first spatial region to the second spatial region. Since the conveying direction follows the course of the conveying path and since the conveying path does not necessarily follow a straight line but may comprise bends and curves, the conveying direction may change in space depending on the position where one looks at the conveying path. Thus, the conveying direction indicates at each position of the conveying path the direction along the conveying path from the first spatial region to the second spatial region.

The conveying electrodes are called conveying electrodes because they enable providing the driving force for conveying the ions along the conveying path in the conveying direction. The ion guide may however comprise further electrodes in addition to the conveying electrodes. Such additional electrodes may for example be confining electrodes for keeping the ions on the conveying path when being conveyed along the conveying path. In order to enable providing the driving force for conveying the ions along the conveying path, the at least three conveying electrodes are arranged in a succession of each other along the conveying path. This means that the at least three conveying electrodes are arranged one after the other along the course of the conveying path from the first spatial region to the second spatial region. Thereby, the conveying electrodes are located outside the spatial region of the conveying path. For example, the conveying electrodes may have an annular shape and surround the spatial region of the conveying path in that the conveying path leads through an opening in the annular shape of the respective conveying electrode. In another example, the conveying electrodes may have a shape like a horseshoe and partially surround the spatial region of the conveying path. In yet another example, the conveying electrodes may have a flat, plane-like shape and be arranged in a plane which is parallel to the conveying direction at the respective position of the conveying path. Or the conveying electrodes may have a linear shape. In this latter example, the conveying electrodes may as well be arranged in a plane which is parallel to the conveying direction at the respective position of the conveying path. In yet another example, the ion guide comprises two separate planes each with a succession of at least three conveying electrodes, wherein the two separate planes are oriented parallel to each other and wherein the conveying path is arranged between the two planes. In this case, each succession of at least three conveying electrodes can provide the features described in the present text.

The succession of the at least three conveying electrodes is aligned along the conveying path in the conveying direction. Consequently, the first one of the at least three conveying electrodes in the succession of the at least three conveying electrodes is the conveying electrode being located the closest of the at least three conveying electrodes to the first spatial region while the last one of the at least three conveying electrodes in the succession of the at least three conveying electrodes is the conveying electrode being located the closest of the at least three conveying electrodes to the second spatial region.

The radio frequency AC voltage control circuitry which is connectable to the at least three conveying electrodes for supplying each of the at least three conveying electrodes with a radio frequency AC voltage can be implemented in a voltage control unit separate from the ion guide or can be incorporated in the ion guide. The radio frequency AC voltage control circuitry may for example be a board, a permanent wiring or be printed on a circuit board. In an example, the radio frequency AC voltage control circuitry comprises one or more power supplies which can each be an AC power supply or a DC power supply. In another example however, the radio frequency AC voltage control circuitry is connectable to one or more separate power supplies which can again each be an AC power supply or a DC power supply. Independent of whether the radio frequency AC voltage control circuitry comprises one or more power supplies or whether the radio frequency AC voltage control circuitry is connectable to one or more separate power supplies and independent of whether the power supply is an AC power supply or a DC power supply, the radio frequency AC voltage control circuitry enables supplying each of the at least three conveying electrodes with the desired radio frequency AC voltage. Thereby, the radio frequency AC voltage is preferably a voltage alternating at a radio frequency. Advantageously, the radio frequency AC voltage follows a sine curve at a radio frequency. In an alternative however, the radio frequency AC voltage may follow a periodic curve at a radio frequency, the periodic curve being different from a sine curve. Thereby, the periodic curve may be a continuously differentiable curve or may be a curve providing kinks and thus provide positions where it is not differentiable.

According to the invention, for each one of the at least three conveying electrodes which is succeeding in the succession of the at least three conveying electrodes a preceding neighbouring conveying electrode of the at least three conveying electrodes, the radio frequency AC voltage has essentially a same frequency. Thus, preferably for each one of the at least three conveying electrodes which is succeeding in the succession of the at least three conveying electrodes a preceding neighbouring conveying electrode of the at least three conveying electrodes, the radio frequency AC voltage has a frequency which is increased or decreased by one-tenth of a percent or less as compared to for the respective preceding neighbouring conveying electrode. In a preferred variant, for each one of the at least three conveying electrodes which is succeeding in the succession of the at least three conveying electrodes a preceding neighbouring conveying electrode of the at least three conveying electrodes, the radio frequency AC voltage has the same frequency as compared to for the respective preceding neighbouring conveying electrode. Independent of whether for each one of the at least three conveying electrodes which is succeeding in the succession of the at least three conveying electrodes a preceding neighbouring conveying electrode of the at least three conveying electrodes, the radio frequency AC voltage has the same or essentially the same frequency as compared to for the respective preceding neighbouring conveying electrode, the frequencies for the at least three conveying electrodes can be changed over time. Such a change over time may be applied to the frequencies for all, for all minus one or fewer than all minus one of the at least three conveying electrodes. For example, such a change over time of the frequencies can be a change at a change rate which is a constant amount per time unit or which is percentage of the respective frequency per time unit. In another example, such a change over time of the frequencies can be a change at a change rate which is a time-dependent, periodic function. In another variant however, the frequencies of the radio frequency AC voltages for the at least three conveying electrodes stay constant over time.

According to the invention, for each one of the at least three conveying electrodes which is succeeding in the succession of the at least three conveying electrodes a preceding neighbouring conveying electrode of the at least three conveying electrodes, the radio frequency AC voltage has essentially a same maximum amplitude as compared to for the respective preceding neighbouring conveying electrode. Thus, preferably for each one of the at least three conveying electrodes which is succeeding in the succession of the at least three conveying electrodes a preceding neighbouring conveying electrode of the at least three conveying electrodes, the radio frequency AC voltage has an maximum amplitude which is increased or decreased by 20% or less, preferably 10% or less, particular preferably by 5% or less as compared to for the respective preceding neighbouring conveying electrode. In a preferred variant for each one of the at least three conveying electrodes which is succeeding in the succession of the at least three conveying electrodes a preceding neighbouring conveying electrode of the at least three conveying electrodes, the radio frequency AC voltage has the same maximum amplitude as compared to for the respective preceding neighbouring conveying electrode. Independent of whether for each one of the at least three conveying electrodes which is succeeding in the succession of the at least three conveying electrodes a preceding neighbouring conveying electrode of the at least three conveying electrodes, the radio frequency AC voltage as the same or essentially the same maximum amplitude as compared to for the respective preceding neighbouring conveying electrode, the maximum amplitudes for the at least three conveying electrodes can be changed over time. Such a change over time may be applied to the maximum amplitudes for all, for all minus one or fewer than all minus one of the at least three conveying electrodes. For example, such a change over time of the maximum amplitude can be a change at a change rate which is a constant amount per time unit or which is percentage of the respective maximum amplitude per time unit. In another example, such a change over time of the maximum amplitude can be a change at a change rate which is a time-dependent, periodic function. In another variant however, the maximum amplitudes of the radio frequency AC voltages for the at least three conveying electrodes stay constant over time.

In addition to the radio frequency AC voltage, the radio frequency AC voltage control circuitry may or may not supply one, more than one or even all of the at least three conveying electrodes with an additional DC voltage for biasing the radio frequency AC voltage. Such an additional supply of a DC voltage may for example be useful in case the ion guide assembly is used to transfer ions from a particular potential at the first spatial region to a same or another potential at the second spatial region.

According to the invention, for each one of the at least three conveying electrodes which is succeeding in the succession of the at least three conveying electrodes a preceding neighbouring conveying electrode of the at least three conveying electrodes, the radio frequency AC voltage has a phase decreased by an amount in a range from 10° to 170° as compared to for the respective preceding neighbouring conveying electrode for generating a radio frequency AC potential wave along the conveying path moving in the conveying direction for conveying the ions along the conveying path in the conveying direction. Consequently, the radio frequency AC voltage control circuitry is connectable to the at least three conveying electrodes for supplying the at least three conveying electrodes with radio frequency AC voltages having for each two neighbouring conveying electrodes a phase difference in a range from 10° to 170°. Thereby, the phase of the radio frequency AC voltage suppliable to each succeeding conveying electrode in the succession of the at least three conveying electrodes is decreased by an amount in the range from 10° to 170° as compared to the phase of the radio frequency AC voltage suppliable to its preceding conveying electrode of the at least three conveying electrodes. When these radio frequency AC voltages are supplied to the conveying electrodes, radio frequency AC potentials are generated by the conveying electrodes. Then, since the phase of the radio frequency AC voltage supplied to each succeeding conveying electrode in the succession of the at least three conveying electrodes is decreased by an amount in the range from 10° to 170° as compared to the phase of the radio frequency AC voltage supplied to its preceding conveying electrode of the at least three conveying electrodes, a radio frequency AC potential wave is generated along the conveying path. Therefore, as the radio frequency AC voltages evolve with time, the radio frequency AC potential wave moves along the conveying path in conveying direction. Thus, for the ions, a driving force for conveying the ions along the conveying path in conveying direction is provided. Thereby, positive and negative ions are conveyed along the conveying path in conveying direction. However, the ions do not necessarily always move only in the conveying direction along the conveying path. There may be moments where an ion moves perpendicular to the conveying direction or even countermoves the conveying direction. There is however a net movement of the ions along the conveying path in the conveying direction. Thus, the ions are conveyed in the conveying direction along the conveying path from the first spatial region to the second spatial region. As an example for a movement of the ions not exclusively in the conveying direction, the ions can move in small circles while being conveyed along the conveying path in the conveying direction.

The ion guide assembly according to the invention and the method for operating the ion guide assembly have the advantage that no high voltages are required which would increase the likelihood of electrical arching. Thus, the ions can be conveyed along the conveying path more reliably. Furthermore, the ion guide assembly according to the invention and the method for operating the ion guide assembly have the advantage that the driving force acts constantly on the ions, enabling to convey a large number of ions efficiently and reliably along the conveying path in the conveying direction.

Advantageously, the radio frequency AC voltage control circuitry is connected to the at least three conveying electrodes for supplying each of the at least three conveying electrodes with the radio frequency AC voltage, wherein for each one of the at least three conveying electrodes which is succeeding in the succession of the at least three conveying electrodes a preceding neighbouring conveying electrode of the at least three conveying electrodes, the radio frequency AC voltage has essentially a same frequency, essentially a same maximum amplitude and a phase decreased by an amount in a range from 10° to 170° as compared to for the respective preceding neighbouring conveying electrode for generating a radio frequency AC potential wave along the conveying path moving in the conveying direction for conveying the ions along the conveying path in the conveying direction. This has the advantage that the ion guide assembly can readily be used for conveying ions along the conveying path in the conveying direction.

Alternatively, the radio frequency AC voltage control circuitry is not connected but connectable to the at least three conveying electrodes for supplying each of the at least three conveying electrodes with the radio frequency AC voltage.

Preferably, the radio frequency AC voltage control circuitry is connectable or connected to the at least three conveying electrodes for supplying each of the at least three conveying electrodes with a radio frequency AC voltage, wherein for each one of the at least three conveying electrodes which is succeeding in the succession of the at least three conveying electrodes a preceding neighbouring conveying electrode of the at least three conveying electrodes, the radio frequency AC voltage has a phase decreased by an amount in a range from 25° to 155°, particular preferably in a range from 40° to 140° as compared to for the respective preceding neighbouring conveying electrode for generating a radio frequency AC potential wave along the conveying path moving in the conveying direction for conveying the ions along the conveying path in the conveying direction. The reason for these advantageous ranges of phase differences is the following:
The larger the phase difference between two neighbouring conveying electrodes is, the shorter the wavelength of the radio frequency AC potential wave along the conveying path is. For example, under the assumption that the conveying electrodes are equally spaced, one wavelength covers six such conveying electrodes if the phase difference between the radio frequency AC voltages supplied to the at least three conveying electrodes is chosen to be 60°. In case of a phase difference of 90°, one wavelength covers four conveying electrodes, while with a phase difference of 120°, one wavelength covers only three conveying electrodes. In case of a phase difference of 150°, one wavelength covers only 2.4 conveying electrodes, while a phase difference of 160° yields a wavelength of 2.25 conveying electrodes. A phase difference of 180° however, where the wavelength would cover only 2 conveying electrodes, would lead to a standing radio frequency AC potential wave which would not provide a driving force for conveying the ions along the conveying path in the conveying direction.

A shorter wavelength of the radio frequency AC potential wave leads to steeper slopes of the radio frequency AC potential wave. Thus, the driving force for conveying the ions along the conveying path in the conveying direction is increased. Consequently, a shorter wavelength has the advantage that the ion guide assembly can be operated at a higher gas pressure. In order to achieve this advantage, there are two parameters which can be influenced. As first parameter, the phase difference of the radio frequency AC voltage supplied to the neighbouring conveying electrodes can be increased. As second parameter, the distance between neighbouring conveying electrodes can be reduced. Both parameter can however only be changed within limits. Reducing the distance between neighbouring conveying electrodes for example is at some point limited by the technical possibilities for manufacturing ion guides with successions of conveying electrodes. With present manufacturing techniques for example, conveying electrodes can be printed on a circuit board at a distance of about 0.2 mm or more. With future manufacturing techniques, this minimal distance may be further decreased. Nonetheless, there will still be the lower limit of a minimal distance. Similarly, as explained above, increasing the phase difference of the radio frequency AC voltage supplied to neighbouring conveying electrodes is only possible within certain limits because at a phase difference of 180°, a standing radio frequency AC potential wave providing no driving force for the ions is achieved. Even more, the closer the phase difference gets to 180° or even to 170°, the less smooth the radio frequency potential wave becomes. Thus, at larger phase differences, the driving force for conveying ions along the conveying path in the conveying direction starts decreasing.

Supplying each of the at least three conveying electrodes with a radio frequency AC voltage, wherein for each one of the at least three conveying electrodes which is succeeding in the succession of the at least three conveying electrodes a preceding neighbouring conveying electrode of the at least three conveying electrodes, the radio frequency AC voltage has a phase being decreased by an amount preferably in a range from 25° to 155°, particular preferably in a range from 40° to 140° is thus an improved optimisation between the above described effects, leading to an optimised driving force for conveying the ions along the conveying path in the conveying direction.

Alternatively however, the phase may be decreased by an amount in a range from 10° to 170°, too.

Advantageously, the ion guide assembly comprises a low pressure chamber for operating the ion guide in a gas pressure in a range from 0.01 mbar to 1 bar, from 0.01 mbar to 100 mbar or from 0.01 mbar to 10 mbar, preferably 0.1 mbar to 1 bar, from 0.1 mbar to 100 mbar or from 0.1 mbar to 10 mbar, particular preferably from 1 mbar to 1 bar, from 1 mbar to 100 mbar or from 1 mbar to 10 mbar. For operating the ion guide in the gas pressure in the indicated pressure range, the low pressure chamber enables to provide in the spatial region of the conveying path a gas pressure in the indicated pressure range. In order to achieve this, the low pressure chamber encloses the spatial region of the conveying path. Thereby, the low pressure chamber is preferably a chamber which separates its inside and thus the spatial region of the conveying path from an outside of the chamber and which enables to achieve and maintain in its inside a gas pressure in the indicated range. Thus, the low pressure chamber can be incorporated in the ion guide or can be a unit separate from the ion guide. In case the low pressure chamber is incorporated in the ion guide, the ion guide can directly be operated in the indicated gas pressure range. In case the low pressure chamber is a unit separate from the ion guide however, the low pressure chamber surrounds the ion guide or is arranged within the ion guide in operation of the ion guide assembly such that the ion guide can be operated in the indicated gas pressure range. In either case, the low pressure chamber can comprise an inlet for inserting the ions into the low pressure chamber and into the ion guide. Similarly, the low pressure chamber can comprise an outlet for letting the ions out of the low pressure chamber and out of the ion guide. This inlet and this outlet can for example each be an orifice or a tube.

In order to enable the ion guide to be operated in the indicated gas pressure range, the low pressure chamber preferably comprises a pressure reduction unit or comprises a line for connecting to a pressure reduction unit for reducing and maintaining the gas pressure within the indicated range in the low pressure chamber and thus in the spatial region of the conveying path. In either case, the pressure reduction unit can for example be a vacuum pump.

In one example, the low pressure chamber comprises different stages with different pressures within the indicated gas pressure range. Such an example is particular suitable in case the ion guide assembly is used to transfer the ions from a first gas pressure in the first spatial region to a second gas pressure in the second spatial region. Thereby, the first gas pressure is higher or lower than the second gas pressure.

Alternatively, the ion guide assembly may go without low pressure chamber.

In the method for operating the ion guide assembly, the ion guide is preferably operated in a gas pressure in a range from 0.01 mbar to 1 bar, from 0.01 mbar to 100 mbar or from 0.01 mbar to 10 mbar, preferably 0.1 mbar to 1 bar, from 0.1 mbar to 100 mbar or from 0.1 mbar to 10 mbar, particular preferably from 1 mbar to 1 bar, from 1 mbar to 100 mbar or from 1 mbar to 10 mbar. In order to achieve this, the ion guide assembly may comprise a low pressure chamber or may be operated in an environment in the given gas pressure range.

Alternatively, the ion guide assembly may be operated in a different gas pressure or even in a vacuum.

In the ion guide assembly and in the method for operating the ion guide assembly, the radio frequency AC voltages preferably have a frequency of 100 kHz or more, preferably 250 kHz or more, particular preferably 500 kHz or more.

Advantageously, the radio frequency AC voltages have a frequency in a range from 100 kHz to 50 MHz, from 250 kHz to 50 MHz, or from 500 kHz to 50 MHz.

Alternatively however, the radio frequency AC voltages may have a frequency lower than 100 kHz or higher than 50 MHz.

Preferably, with each one of the at least three conveying electrodes, when supplied with the radio frequency AC voltages by the radio frequency AC voltage control circuitry, an electric field is generatable having a maximum strength in a range between 1 V/mm and 5'000 V/mm.

Alternatively, with one or more of the at least three conveying electrodes, when supplied with the radio frequency AC voltages by the radio frequency AC voltage control circuitry, an electric field having a maximum strength of 1 V/mm or less, or 5'000 V/mm or more is generatable.

Advantageously, the radio frequency AC voltage control circuitry is connectable or connected to the at least three conveying electrodes for supplying the at least three conveying electrodes with radio frequency AC voltages having for each two neighbouring conveying electrodes of the at least three conveying electrodes a phase difference in angular units which is a distance between the respective two neighbouring conveying electrodes in length units multiplied by a factor in units corresponding to the angular units divided by the length units, wherein the factor is the same for each two neighbouring conveying electrodes of the at least three conveying electrodes. This has the advantage that the radio frequency AC potential wave provides along the conveying path uniformly a same wavelength. Thus, the ions are essentially uniformly conveyed along the conveying path in the conveying direction.

Alternatively, the factor is different for at least two neighbouring conveying electrodes of the at least three conveying electrodes. In such an alternative, the factor for example continuously decreases or continuously increases for each two neighbouring conveying electrodes along the succession of the at least three conveying electrodes. These two variants have the advantage that ions can be decelerated or accelerated when being conveyed along the conveying path.

Preferably, each two neighbouring conveying electrodes of the at least three conveying electrodes are separated by the same distance. This has the advantage that the driving force for conveying the ions along the conveying path in the conveying direction can easily be evenly provided along the conveying path. Thus, it is simplified to uniformly convey the ions along the conveying path in the conveying direction.

In case at the same time, the radio frequency AC voltage control circuitry is connectable or connected to the at least three conveying electrodes for supplying the at least three conveying electrodes with radio frequency AC voltages having for each two neighbouring conveying electrodes of the at least three conveying electrodes a phase difference in angular units which is the distance between the respective two neighbouring conveying electrodes in length units multiplied by a factor in units corresponding to the angular units divided by the length units, wherein the factor is the same for each two neighbouring conveying electrodes of the at least three conveying electrodes, then the amount the phases of the radio frequency AC voltages for each two neighbouring conveying electrodes of the at least three conveying electrodes differ from each other is for each two neighbouring conveying electrodes the same.

Alternatively, at least two neighbouring conveying electrodes of the at least three conveying electrodes are separated by a different distance than the other two neighbouring conveying electrodes of the at least three conveying electrodes. In such an alternative, the distance between two neighbouring conveying electrodes for example continuously decreases or continuously increases for each two neighbouring conveying electrodes along the succession of the at least three conveying electrodes.

Advantageously, the ion guide comprises at least one confining electrode for applying an electric field for confining the ions on the conveying path when being conveyed along the conveying path. Thereby, the at least one confining electrode is preferably located outside the spatial region of the conveying path. The ion guide comprising at least one confining electrode has the advantage that it is simpler to keep the ions on the conveying path.

In one example, one or more of the at least one confining electrode extends along the conveying path and is suppliable with a DC voltage for generating a repulsive potential for the ions such that the ions are kept on the conveying path. In another example, the ion guide comprises an array of confining electrodes arranged in succession along the conveying path. In one variant of this example, the confining electrodes of the array are suppliable with a DC voltage for generating a repulsive potential for keeping the ions on the conveying path. In another variant of this example however, the confining electrodes of the array are suppliable with a radio frequency AC voltage wherein the radio frequency AC voltage for each confining electrode provides a phase being different by about 180° as compared to the phase of the radio frequency AC voltage for its neighbouring confining electrodes in order to generate a repulsive pseudopotential for keeping the ions on the conveying path. Independent of whether the array of confining electrodes arranged in succession along the conveying path is supplied with a DC voltage or with radio frequency AC voltages, the confinement electrodes of the array can be supplied with different voltage levels i.e. different maximum voltages along the conveying path for adapting the amount of the effect on the ions depending on where the ions are located along the conveying path. This may for example be particular advantageous in case the conveying path provides one or more bend or kink.

In order to illustrate different possible arrangements with at least one confining electrode for applying an electric field for confining the ions on the conveying path when being conveyed along the conveying path, one can start with the already previously mentioned embodiment where the ion guide comprises two separate planes each with a succession of at least three conveying electrodes, wherein the two separate planes are oriented parallel to each other and wherein the conveying path is arranged between the two planes. In case the conveying electrodes of both successions provide a rod-like shape being oriented perpendicular to the course of the conveying path, the ions may slip out of the ion guide laterally between the two planes. Thus, on each side of the conveying path between the two planes at least one confining electrode as described can be arranged along the conveying path. This can for example be one confining electrode which extends between the two planes on the respective side of the conveying path along the conveying path. In another example, this can be an array of confining electrodes which are supplied with a DC voltage or with a radio frequency AC voltage, the array extending between the two planes on the respective side of the conveying path along the conveying path. In yet another example, one of the two planes with one of the successions of at least three conveying electrodes can be replaced by one confining electrode extending along the conveying path opposite of the remaining plane with the remaining succession of at least three conveying electrodes. Or the conveying electrodes of one of the two planes can be chanced into confining electrodes by supplying them either with a DC voltage or a radio frequency AC voltage with phase differences of 180° between neighbouring electrodes. These are just examples for illustrating different possible arrangements with at least one confining electrode for applying an electric field for confining the ions on the conveying path when being conveyed along the conveying path. Other arrangements with at least one confining electrode for applying an electric field for confining the ions on the conveying path when being conveyed along the conveying path are possible, too.

Preferably, at least one of the at least one confining electrode is arranged between two neighbouring conveying electrodes of the at least three conveying electrodes. Thus, if seen along the conveying path, the respective at least one of the at least one confining electrode is located between the respective two neighbouring conveying electrodes of the at least three conveying electrodes. For illustration purposes, the already previously mentioned embodiment where the ion guide comprises two separate planes each with a succession of at least three conveying electrodes, wherein the two separate planes are oriented parallel to each other and wherein the conveying path is arranged between the two planes can be used. In this illustrative embodiment, the at least one of the at least one confining electrode being arranged between two neighbouring conveying electrodes of the at least three conveying electrodes can for example be arranged in one of the planes between the respective two neighbouring conveying electrodes. Independent of this illustrative embodiment, at least one of the at least one confining electrode being arranged between two neighbouring conveying electrodes of the at least three conveying electrodes has the advantage that the ions can be confined to the conveying path locally in the area of the respective two neighbouring conveying electrodes. This can be particular advantageous in case the conveying path provides a bend or kink in the area of the respective two neighbouring conveying electrodes.

Advantageously, between each two neighbouring conveying electrodes of the at least three conveying electrodes, one of the at least one confining electrode is arranged. Again, if seen along the conveying path, the respective one of the at least one confining electrode is located between the respective two neighbouring conveying electrodes of the at least three conveying electrodes. In this preferred variant, the ion guide preferably comprises at least a minimal number of confining electrodes for applying an electric field for confining the ions on the conveying path when being conveyed along the conveying path, the minimal number of confining electrodes being one less than a number of conveying electrodes of the at least three conveying electrodes. Thus, these confining electrodes form an array of confining electrodes providing the already mentioned advantages.

In a variant however, none of the at least one confining electrode is arranged between two neighbouring conveying electrodes of the at least three conveying electrodes.

Alternatively, the ion guide goes without confining electrode for applying an electric field for confining the ions on the conveying path when being conveyed along the conveying path. Such an alternative has the advantage that the ion guide and thus the entire ion guide assembly can be constructed simpler, because less electrodes are required.

In case the ion guide comprises at least one confining electrode for applying an electric field for confining the ions on the conveying path when being conveyed along the conveying path, the ion guide assembly preferably comprises a confinement control circuitry connectable to the at least one confining electrode for supplying the at least one confining electrode with a radio frequency AC voltage or with a DC voltage. In either case, the confinement control circuitry is preferably connected to the at least one confining electrode for supplying the at least one confining electrode with a radio frequency AC voltage or with a DC voltage. In case there are two or more confining electrodes, these two or more confining electrodes can each be supplied by the confinement control circuitry with a same voltage or different voltages. In case of different voltages, one or more of the two or more confining electrodes can be supplied with a radio frequency AC voltage while one or more other of the two or more confining electrodes can be supplied with a DC voltage.

The confinement control circuitry which is connectable or connected to the at least one confining electrodes for supplying each of the at least one confining electrodes with a radio frequency AC voltage or with a DC voltage can be implemented in a voltage control unit separate from the ion guide or can be incorporated in the ion guide. The confinement control circuitry may for example be a board, a permanent wiring or be printed on a circuit board. In an example, the confinement control circuitry comprises one or more power supplies which can each be an AC power supply or a DC power supply. In another example however, the confinement control circuitry is connectable to one or more separate power supplies which can again each be an AC power supply or a DC power supply. Independent of whether the confinement control circuitry comprises one or more power supplies or whether the confinement control circuitry is connectable to one or more separate power supplies and independent of whether the power supply is an AC power supply or a DC power supply, the confinement control circuitry enables supplying each of the at least three conveying electrodes with the desired radio frequency AC voltage or the desired DC voltage. Thereby, in case of a radio frequency AC voltage, the radio frequency AC voltage is preferably a voltage alternating at a radio frequency. Advantageously, this radio frequency AC voltage follows a sine curve at a radio frequency. In an alternative however, this radio frequency AC voltage may follow a periodic curve at a radio frequency, the periodic curve being different from a sine curve. Thereby, the periodic curve may be a continuously differentiable curve or may be a curve providing kinks and thus provide positions where it is not differentiable. Independent of the shape of this radio frequency AC voltage, in case the ion guide comprises two or more confining electrodes, the radio frequency AC voltage suppliable confining electrodes is preferably for each two neighbouring confining electrodes out of phase by about 180°.

In a first preferred variant, the confinement control circuitry is incorporated in the radio frequency AC voltage control circuitry. This has the advantage that the ion guide assembly can be assembled easier.

In a second preferred variant, the confinement control circuitry is separate from the radio frequency AC voltage control circuitry. This has the advantage that confinement control circuitry and the radio frequency AC voltage control circuitry can be replaced separately, if required. Thus, maintenance of the ion guide assembly is simplified.

Alternatively however, the ion guide assembly goes without confinement control circuitry connectable to the at least one confining electrode for supplying the at least one confining electrode with a radio frequency AC voltage or with a DC voltage.

Preferably, the at least three conveying electrodes are arranged in a plane. This means that faces of the at least three conveying electrodes which are facing the conveying path are preferably arranged in a plane. In case the at least three conveying electrodes have a flat or a linear shape and thus extend substantially only in two or even substantially only in one direction, the entire conveying electrodes are arranged in the plane. In case any of the at least three conveying electrodes provides a rather three dimensional shape in the sense that the respective one or more conveying electrode extends substantially in three directions, the respective one or more conveying electrode provides a face facing the conveying path which is arranged in the same plane as the face of any other such conveying electrode and in the same plane as any other flat or linear conveying electrode. Having the at least three conveying electrodes arranged in a plane has the advantage that it is simpler to provide a more homogeneous driving force for conveying the ions more homogeneously along the conveying path in the conveying direction.

In case the at least three conveying electrodes are arranged in a plane, the ion guide preferably comprises at least one electrode for applying an electric field for confining the ions on the conveying path when being conveyed along the conveying path, the at least one electrode being arranged essentially on an opposite side of the conveying path than the succession of the at least three conveying electrodes. Thereby, the at least one electrode for applying an electric field for confining the ions on the conveying path when being conveyed along the conveying path can be the at least one confining electrode mentioned above or can be another succession of at least three conveying electrodes as described above. In this latter case, both successions of at least three conveying electrodes can provide the features described in the present text. In a variant however, the ion guide may go without such electrode for applying an electric field for confining the ions on the conveying path when being conveyed along the conveying path.

Alternatively, the at least three conveying electrodes may be arranged differently, too.

Advantageously, the at least three conveying electrodes are printed on a circuit board. This has the advantage that it is easier to fabricate the ion guide.

Alternatively however, the at least three conveying electrodes are produced differently.

Advantageously, at least two of the at least three conveying electrodes each provide a shape where within a central region of the respective conveying electrode, with increasing distance from the conveying path measured perpendicular to a direction of the conveying path, the respective conveying electrode reaches further into the conveying direction. Thereby, the shortest distance between the respective conveying electrode and the conveying path is preferably measured from a point comprised by the central region.

Since within the central region of the respective conveying electrode, with increasing distance from the conveying path measured perpendicular to the direction of the conveying path, the respective conveying electrode reaches further into the conveying direction, the at least two of the at least three conveying electrodes preferably each provide a shape where within the central region of the respective conveying electrode, the further a point on a side of the respective conveying electrode facing in the conveying direction is distanced from the conveying path, the further ahead the respective point is in the conveying direction. Thereby, the side of the respective conveying electrode facing in the conveying direction refers to the sum of surface elements of the surface of the respective conveying electrode having a normal vector pointing away from the respective conveying electrode and being oriented in space at an angle of less than 80° with respect to the conveying direction. This includes normal vectors which are parallel to the conveying direction and which are thus oriented at an angle of 0° with respect to the conveying direction.

The at least two of the at least three conveying electrodes each providing a shape where within a central region of the respective conveying electrode, with increasing distance from the conveying path measured perpendicular to a direction of the conveying path, the respective conveying electrode reaching further into the conveying direction, provides the advantage that the at least two conveying electrodes having such a particular shape enable to focus the ions onto the conveying path. Thus, in the area of these conveying electrodes, confinement of the ions onto the conveying path is simplified such that less or even no confinement electrode is required. Consequently, the ion guide assembly can be constructed simpler and cheaper. Additionally, controlling of the ion guide assembly is simplified.

Advantageously, the central region of the respective conveying electrode covers at least 60%, particular advantageously at least 80% and most advantageously at least 90% of the side of the respective conveying electrode facing in the conveying direction or even the entire side of the respective conveying electrode facing the conveying direction. Thereby, the higher the percentage of the side of the respective conveying electrode facing the conveying direction being covered by the central region is, the better the respective conveying electrode focuses the ions onto the conveying path.

Advantageously, the at least three conveying electrodes each provide a shape where within a central region of the respective conveying electrode, with increasing distance from the conveying path measured perpendicular to a direction of the conveying path, the respective conveying electrode reaches further into the conveying direction as described above. This has the advantage that along the conveying path, confinement of the ions onto the conveying path is simplified such that less or even no confinement electrode is required. Consequently, the ion guide assembly can be constructed simpler and cheaper. Additionally, controlling of the ion guide assembly is simplified.

These advantages are obtained independent of other features of the shape of the respective conveying electrodes. Thus, the two or more conveying electrodes, which provide a shape where the further a point of the respective conveying electrode is distanced from the conveying path, the further ahead the respective point is in the conveying direction, can for example be linear or flat conveying electrodes or can for example substantially extend in three dimensions. In the latter case, the respective conveying electrodes can for example have a shape of a skin surface of a truncated cone, wherein the cone opens in the conveying direction.

In a particular advantageous variant, the ion guide comprises two separate planes each with a succession of at least three conveying electrodes, wherein the two separate planes are oriented parallel to each other and wherein the conveying path is arranged between the two planes, wherein in each succession, at least every second conveying electrode along the respective succession of at least three conveying electrodes provides a shape where the further a point of the respective conveying electrode is distanced from the conveying path, the further ahead the respective point is in the conveying direction. This variant has the advantage that along the entire conveying path, confinement of the ions onto the conveying path is provided such that no confinement electrode is required. Consequently, the ion guide assembly can be constructed simpler and cheaper. Additionally, controlling of the ion guide assembly is simplified.

Alternatively, only one or none of the at least three conveying electrodes provides a shape where the further a point of the respective conveying electrode is distanced from the conveying path, the further ahead the respective point is in the conveying direction.

Preferably, an apparatus comprises an ion guide assembly according to the invention for conveying ions along the conveying path.

In case of an apparatus comprising an ion guide assembly according to the invention for conveying ions along the conveying path, the apparatus advantageously comprises an electrode arrangement arranged in one of the first spatial region and the second spatial region of the ion guide for generating a potential in the respective one of the first spatial region and the second spatial region of the ion guide which is different to a potential in the other one of the first spatial region and the second spatial region of the ion guide. Irrelevant of whether the electrode arrangement is part of the ion guide, the ion guide assembly or the apparatus, this has the advantage that in operation, a potential experienced by the ions in the first spatial region can be chosen to be different to a potential experienced by the ions in the second spatial region. Thus, a transfer of the ions from one potential to another potential is enabled by conveying the ions with the ion guide assembly along the conveying path in the conveying direction. Alternatively however, the apparatus can go without such an electrode arrangement.

In case the apparatus comprises an electrode arrangement arranged in one of the first spatial region and the second spatial region of the ion guide for generating a potential in the respective one of the first spatial region and the second spatial region of the ion guide which is different to a potential in the other one of the first spatial region and the second spatial region of the ion guide, for the ions to be conveyed by the ion guide assembly, the potential in the second spatial region is advantageously higher than the potential in the first spatial region of the ion guide. Consequently, in operation of the apparatus, the ions are conveyed by the ion guide assembly against the potential difference from the first spatial region and the second spatial region. This has the advantage that the ions can easily be conveyed from an area with a lower potential to an area with a higher potential.

In an alternative however, for the ions to be conveyed by the ion guide assembly, the potential in the second spatial region is advantageously lower than the potential in the first spatial region of the ion guide or equal to the potential in the first spatial region of the ion guide.

Independent of whether the apparatus comprises an electrode arrangement arranged in one of the first spatial region and the second spatial region of the ion guide for generating a potential in the respective one of the first spatial region and the second spatial region of the ion guide which is different to a potential in the other one of the first spatial region and the second spatial region of the ion guide and independent of whether the potential in second spatial region experienced by the ions to be conveyed along the conveying path is higher, equal or lower than the potential in the first spatial region, the apparatus is advantageously an ion mobility spectrometer and comprises advantageously an ion detector for detecting the ions. This ion detector can for example be a mass spectrometer, a photomultiplier or the like.

In case the apparatus is an ion mobility spectrometer, the apparatus advantageously comprises an ion separation region, wherein an ion guide assembly according to the invention is arranged for conveying ions along the conveying path through the ion separation region for separating the ions according to their mobility.

In an advantageous variant however, the ion guide assembly according to the invention is arranged for conveying the ions along the conveying path from the ion separation region to the ion detector. In this case, the ion detector can be a mass spectrometer, a photomultiplier or the like. Independent of the type of ion detector, the apparatus preferably comprises in this case an electrode arrangement arranged in one of the first spatial region and the second spatial region of the ion guide for generating a potential in the respective one of the first spatial region and the second spatial region of the ion guide which is different to a potential in the other one of the first spatial region and the second spatial region of the ion guide, wherein the potential in second spatial region is higher than the potential in the first spatial region. Independent of the type of ion detector and independent of whether the apparatus comprises the before mentioned electrode arrangement, the ion guide assembly can reach only from the ion separation region to the ion detector in order to convey ions having passed through the ion separation region along the conveying path from the end of the ion separation region to the ion detector, or the ion guide assembly can be arranged for conveying the ions first along the conveying path through the ion separation region for separating the ions according to their mobility and second to the ion detector.

In a variant, the apparatus can also comprise two ion guide assemblies according to the invention. In this case, a first one of the two ion guide assemblies is advantageously arranged for conveying ions along its conveying path through the ion separation region for separating the ions according to their mobility, while a second one of the two ion guide assemblies is arranged for conveying the ions along its conveying path from the ion separation region to the ion detector.

Advantageously, in a method for operating such an ion mobility spectrometer, ions are conveyed along the conveying path in conveying direction by operating the ion guide assembly according to the invention with the method according to the invention through the ion separation region of the ion mobility spectrometer for separating the ions according to their mobility or the ions are conveyed along the conveying path in conveying direction from the ion separation region to the ion detector by operating the ion guide assembly according to the invention with the method according to the invention.

Thereby, conveying the ions along the conveying path in conveying direction by operating the ion guide assembly according to the invention with the method according to the invention through the ion separation region of the ion mobility spectrometer for separating the ions according to their mobility has the advantage that compared to known ion mobility spectrometers and compared to known methods for operating such ion mobility spectrometers, ion mobilities of two molecular ions having a same charge and having very similar shapes can be separated without the risk of electrical arching due to high DC voltages. Thus, ion mobility spectra can be obtained more efficiently and reliably. Furthermore, such an ion mobility spectrometer and such a method have the advantage that a broad spectrum of different ion mobilities can be detected in one duty cycle. Additionally, since ion diffusion due to ion-ion repulsion is reduced, ion mobility spectra for larger numbers of ions within a comparably short time can be obtained more efficiently and reliably than if an ion guide assembly employing travelling DC potential wells as described in EP 1 367 633 A2 of Micromass Limited would be used.

Conveying the ions along the conveying path in conveying direction from the ion separation region to the ion detector by operating the ion guide assembly according to the invention with the method according to the invention on the other hand has the advantage that a very efficient and reliable transport of the ions separated according to their mobility to the ion detector is enabled.

Other advantageous embodiments and combinations of features come out from the detailed description below and the totality of the claims.

### Brief description of the drawings

The drawings used to explain the embodiments show:
- Fig. 1: a schematic view of a cross section of a first ion guide assembly according to the invention for conveying ions along a conveying path in a conveying direction,
- Fig. 2: a schematic view of a cross section of a second ion guide assembly according to the invention for conveying ions along the conveying path in the conveying direction,
- Fig. 3: a schematic view of a cross section of a third ion guide assembly according to the invention for conveying ions along the conveying path in the conveying direction,
- Fig. 4: a schematic view of a cross section of a fourth ion guide assembly according to the invention for conveying ions along the conveying path in the conveying direction,
- Fig. 5: a schematic view of a succession of conveying electrodes which are printed on a board,
- Fig. 6: illustrates that an ion guide assembly according to the invention can be employed in an ion mobility spectrometer comprising an ion separation region, wherein the ion guide assembly according to the invention is used to convey the ions along the conveying path in the conveying direction through the ion separation region for separating the ions according to their mobility,
- Fig. 7a, b, c: illustrate in a schematic view how the radio frequency AC potential wave is generated by the conveying electrodes being supplied with the radio frequency AC voltage, and
- Fig. 8: illustrates that an ion guide assembly according to the invention can be employed in an ion mobility spectrometer comprising an ion separation region and an ion detector, wherein the ion guide assembly according to the invention is used to convey the ions along the conveying path in the conveying direction from the ion separation region to the ion detector.

In the figures, the same components are given the same reference symbols.

### Preferred embodiments

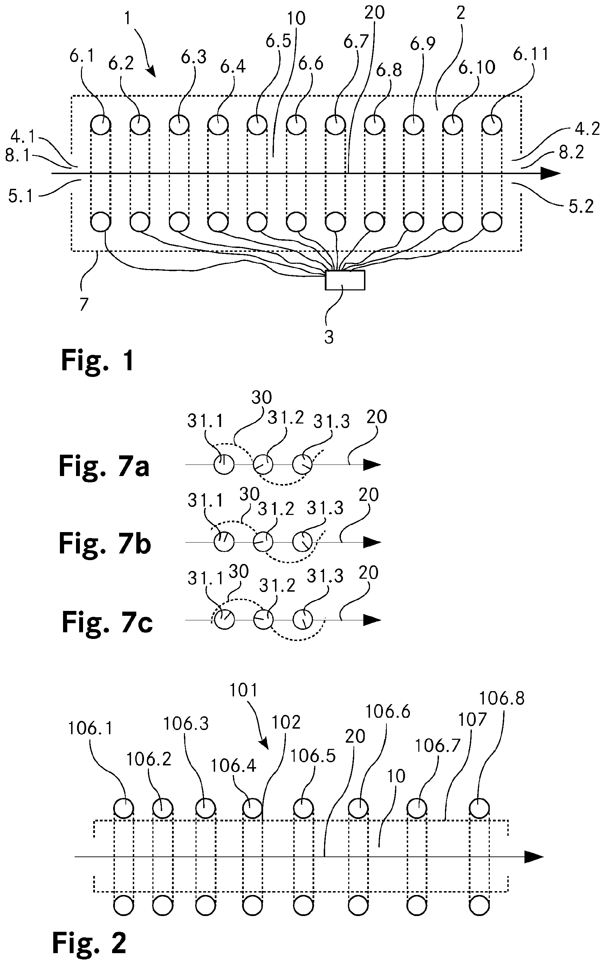

Figure 1 shows a schematic view of a cross section of a first ion guide assembly 1 according to the invention for conveying ions along a conveying path 10 in a conveying direction 20. In Figure 1, this conveying direction 20 is indicated by an arrow pointing from the left to the right.

The first ion guide assembly 1 comprises an ion guide 2 and a radio frequency AC voltage control circuitry 3. The ion guide 2 has a first end 4.1 and a second end 4.2 which is spatially separated from the first end 4.1. In an area of the first end 4.1, a first spatial region 5.1 is located while in an area of the second end 4.2, a second spatial region 5.2 is located. Thus, the second spatial region 5.2 is spatially separated from the first spatial region 5.1. The conveying path 10 reaches from the first spatial region 5.1 to the second spatial region 5.2. It is essentially a spatial region connecting the first spatial region 5.1 to the second spatial region 5.2, wherein the ions move within the spatial region of the conveying path 10 when being conveyed along the conveying path 10 in the conveying direction 20 from the first spatial region 5.1 to the second spatial region 5.2.

The ion guide 2 comprises eleven conveying electrodes 6.1, ..., 6.11 which are arranged in a succession of each other along the conveying path 10. Thus, a first one of the succession of the conveying electrodes 6.1 is arranged in the area of the first end 4.1 of the ion guide 2, while the eleventh one of the succession of the conveying electrodes 6.11 is arranged in the area of the second end 4.2 of the ion guide 2. The conveying electrodes 6.1, ..., 6.11 have an annular shape and the conveying path 10 leads through the openings in the annular shaped conveying electrodes 6.1, ..., 6.11. As Figure 1 is a cross sectional view of the first ion guide assembly 1, it shows a cross section along a length of the ion guide 2 and along the conveying path 10. Thus, in Figure 1, a cut through the conveying electrodes 6.1, ..., 6.11 is shown such that only half of the annular shaped conveying electrodes 6.1, ..., 6.11 is visible.

The radio frequency voltage control circuitry 3 is a unit which is separate from the ion guide 2. It is connected to each one of the eleven conveying electrodes 6.1, ..., 6.11 for supplying each one of the eleven conveying electrodes 6.1, ..., 6.11 with a radio frequency AC voltage. Thereby, for each one of the eleven conveying electrodes 6.2, ..., 6.11 which is succeeding in the succession of the eleven conveying electrodes 6.1, ..., 6.11 a preceding neighbouring conveying electrode 6.1, ..., 6.10 of the eleven conveying electrodes 6.1, ..., 6.11, the radio frequency AC voltage has a same frequency of 500 kHz, a same maximum amplitude of 100 Volt resulting in a peak to peak amplitude of 200 Volt and a phase decreased by an amount of 120° as compared to for the respective preceding neighbouring conveying electrode 6.1, ..., 6.10. Thus, as the conveying electrodes 6.1, ..., 6.11 are supplied with the radio frequency AC voltage, a radio frequency AC potential wave is generated along the conveying path 10 as illustrated in Figures 7a to 7c. This radio frequency AC potential wave moves along the conveying path 10 in conveying direction 20. For the ions, this radio frequency AC potential wave is seen as a driving force that conveys the ions along the conveying path 10 in the conveying direction 20 from the first spatial region 5.1 to the second spatial region 5.2.

As already mentioned, in the first ion guide assembly 1 shown in Figure 1, the radio frequency voltage control circuitry 3 is a unit which is separate from the ion guide 2. In another embodiment however, the radio frequency voltage control circuitry 3 is integrated in the ion guide 2. In either case, the radio frequency voltage control circuitry 3 is connected to a power supply which is not shown here. In another example, the radio frequency voltage control circuitry 3 comprises its own power supply. In either case, this power supply can be a DC power supply or an AC power supply.

In the embodiment shown in Figure 1, the radio frequency AC voltage supplied to the conveying electrodes 6.1, ..., 6.11 has a frequency of 500 kHz. This frequency can however be different. In another embodiment, it is 100 kHz. In another embodiment, it is 150 kHz. In another example, it is 250 kHz. In yet another example, it is 1 MHz or 2 MHz. It can also be 10 Mhz or any frequency up to 50 MHz or more. In a further example, the frequency of the radio frequency AC voltages supplied to the conveying electrodes is changed over time. For example, it can be decreased, increased, or changed according to any pattern like for example a periodic pattern over time.

In the first ion guide assembly 1 shown in Figure 1, the ion guide 2 comprises a low pressure chamber 7. This low pressure chamber 7 surrounds the conveying path 10 and conveying electrodes 6.1, ..., 6.11. It provides an inlet 8.1 at the first end 4.1 of the ion guide 2 for inserting the ions into the ion guide 2. Furthermore, the low pressure chamber 7 provides an outlet 8.2 at the second end 4.2 of the ion guide 2 for the ions to exit the ion guide 2. Both the inlet 8.1 and the outlet 8.2 are formed by an orifice.

The low pressure chamber 7 is constructed for operating the ion guide 2 in a gas pressure in a range from 0.01 mbar to 1 bar. Depending on the needs of the ion guide assembly 1, this range can be different. In other examples, the low pressure chamber 7 is constructed for operating the ion guide 2 in a gas pressure in a range from 0.01 mbar to 100 mbar, a range from 0.01 mbar to 10 mbar, a range 0.1 mbar to 1 bar, a range from 0.1 mbar to 100 mbar, a range from 0.1 mbar to 10 mbar, a range from 1 mbar to 1 bar, a range from 1 mbar to 100 mbar or a range from 1 mbar to 10 mbar or even any other range. In order to achieve a gas pressure in the respective range in the ion guide 2, the ion guide 2 can for example be connected with the inlet 8.1 and/or the outlet 8.2 to another low pressure chamber which provides the desired gas pressure such that on the inside of the low pressure chamber 7, the desired gas pressure is reached. In another example however, the low pressure chamber 7 provides a connection to a vacuum pump which is or is not part of the ion guide assembly 1 and which enables to reach a gas pressure on the inside of the low pressure chamber 7 within the desired range. In yet another example, the low pressure chamber 7 comprises two or more stages each with a different gas pressure.

As mentioned, the low pressure chamber 7 surrounds the conveying path 10 and conveying electrodes 6.1, ..., 6.11. It is however sufficient if the low pressure chamber 7 surrounds the conveying path 10 such that the spatial region of the conveying path 10 provides a gas pressure in the desired range. Consequently, in a variant to the first ion guide assembly 1 shown in Figure 1, the low pressure chamber 7 is constructed to be arranged in the opening of the annular shaped conveying electrodes 6.1, ..., 6.11. In this case, the low pressure chamber 7 is a tube leading through the openings of the annular shaped conveying electrodes 6.1, ..., 6.11, wherein the conveying path 10 is arranged in the inside of the low pressure chamber 7.

In yet another embodiment however, the ion guide assembly can go without such a low pressure chamber.

In the first ion guide assembly 1 shown in Figure 1, each two neighbouring conveying electrodes 6.1, ..., 6.11 of the conveying electrodes 6.1, ..., 6.11 are separated by the same distance. Since the radio frequency AC voltage supplied to the conveying electrodes 6.1, ..., 6.11 has the same frequency, the conveying electrodes 6.1, ..., 6.11 are supplied with radio frequency AC voltages having for each two neighbouring conveying electrodes 6.1, ..., 6.11 of the conveying electrodes 6.1, ..., 6.11 a phase difference in angular units which is the distance between the respective two neighbouring conveying electrodes 6.1, ..., 6.11 in length units multiplied by a factor in units corresponding to the angular units divided by the length units, wherein the factor is the same for each two neighbouring conveying electrodes 6.1, ..., 6.11.

In a variant to the embodiments described above, the frequencies of radio frequency AC voltages supplied to the conveying electrodes 6.1, ..., 6.11 may differ somewhat from conveying electrode to conveying electrode. In such a case, the conveying electrodes 6.1, ..., 6.11 are supplied with radio frequency AC voltages having essentially the same frequency. Thus, for example, for each one of the conveying electrodes 6.2, ..., 6.11 which is succeeding in the succession of the conveying electrodes 6.1, ..., 6.11 a preceding neighbouring conveying electrodes 6.1, ..., 6.10 of the conveying electrodes 6.1, ..., 6.11, the radio frequency AC voltage has a frequency which is increased or decreased by one-tenth of a percent or less as compared to for the respective preceding neighbouring conveying electrode 6.1, ..., 6.10. In one example where the frequency is increased by one-tenth of a percent from conveying electrode 6.1, ..., 6.10 to conveying electrode 6.2, ..., 6.11, the first conveying electrode 6.1 of the succession of conveying electrodes 6.1, ..., 6.11 is supplied with a radio frequency AC voltage having a frequency of 500 kHz. In this example, the second conveying electrode 6.2 is supplied with a radio frequency AC voltage having a frequency of 505 kHz, while the third conveying electrode 6.3 is supplied with a radio frequency AC voltage having a frequency of 510.05 kHz. In this arrangement, the eleventh conveying electrode 6.11 is supplied with a radio frequency AC voltage having a frequency of 552.311 kHz. In the beginning, the phase of the radio frequency AC voltages supplied to the conveying electrodes 6.1, ..., 6.11 decreases along the succession of conveying electrodes 6.1, ..., 6.11 from conveying electrode 6.1, ..., 6.10 to conveying electrode 6.2, ..., 6.11 by 170°. This phase difference is however decreased until it reaches a phase decrease of 10° from conveying electrode 6.1, ..., 6.10 to conveying electrode 6.2, ..., 6.11. At this point, the radio frequency AC voltages supplied to the conveying electrodes 6.1, ..., 6.11 can be changed back to the initial phase decrease of 170° from conveying electrode 6.1, ..., 6.10 to conveying electrode 6.2, ..., 6.11. Thus, in this particular example, the phase is always decreased by an amount in a range from 10° to 170°.

In the same way, the phase decrease of the radio frequency AC voltage can always be maintained in a reduced range like for example from 25° to 155° or from 40° to 140°.

In a further embodiment, the radio frequency AC voltages supplied to the conveying electrodes are continuously maintained the same all the time. In this case, if the frequencies differ from each other, the phase is decreased by an amount in a range from 10° to 170°, from 25° to 155° or from 40° to 140° only during certain, regularly appearing periods of time. During these periods, ions can be conveyed along the conveying path 10 in the conveying direction 20.

In a variant to the embodiments described above, the maximum amplitude of the radio frequency AC voltages supplied to the conveying electrodes 6.1, ..., 6.11 may differ somewhat from conveying electrode to conveying electrode. In such a case, in a first example, the conveying electrodes 6.1, ..., 6.11 are supplied with a radio frequency AC voltage having essentially a same maximum amplitude. Thus, for example, for each one of the conveying electrodes 6.2, ..., 6.11 which is succeeding in the succession of the conveying electrodes 6.1, ..., 6.11 a preceding neighbouring conveying electrodes 6.1, ..., 6.10 of the conveying electrodes 6.1, ..., 6.11, the radio frequency AC voltage has a maximum amplitude which is increased or decreased by 20% or less as compared to for the respective preceding neighbouring conveying electrode 6.1, ..., 6.10. In a second example, for each one of the conveying electrodes 6.2, ..., 6.11 which is succeeding in the succession of the conveying electrodes 6.1, ..., 6.11 a preceding neighbouring conveying electrodes 6.1, ..., 6.10 of the conveying electrodes 6.1, ..., 6.11, the radio frequency AC voltage has a maximum amplitude which is increased or decreased by 10% or less as compared to for the respective preceding neighbouring conveying electrode 6.1, ..., 6.10. In a third example however, for each one of the conveying electrodes 6.2, ..., 6.11 which is succeeding in the succession of the conveying electrodes 6.1, ..., 6.11 a preceding neighbouring conveying electrodes 6.1, ..., 6.10 of the conveying electrodes 6.1, ..., 6.11, the radio frequency AC voltage has a maximum amplitude which is increased or decreased by 5% or less as compared to for the respective preceding neighbouring conveying electrode 6.1, ..., 6.10.

Figure 7a, 7b and 7c illustrate in a schematic view how the radio frequency AC potential wave 30 is generated by the conveying electrodes being supplied with the radio frequency AC voltage.

In each of the Figures 7a, 7b and 7c, the conveying direction 20 is indicated with an arrow pointing from the left in the respective Figure to the right in the respective Figure. Furthermore, at the position of each conveying electrode, a circle is shown with a radial line indicating the phase 31.1, 31.2, 31.3 of the radio frequency AC voltage supplied to the respective conveying electrode at the given point in time. Additionally, the radio frequency AC potential wave 30 is shown as a dashed line. Since the succession of the at least three conveying electrodes is aligned along the conveying path in the conveying direction, the left most conveying electrode in each one of Figures 7a, 7b and 7c is the first conveying electrode in the succession of the at least three conveying electrodes, while the centre conveying electrode is the second conveying electrode in the succession of the at least three conveying electrodes and the right most conveying electrode is the third conveying electrode in the succession of the at least three conveying electrodes.

In the illustration of Figures 7a, 7b and 7c, the phases 31.1, 31.2, 31.3 of the radio frequency AC voltages supplied to only three succeeding conveying electrodes are shown since it is possible that the ion guide of an ion guide assembly according to the invention comprises only three conveying electrodes. The pattern of the phases 31.1, 31.2, 31.3 of the radio frequency AC voltage can however be extended to any larger number of conveying electrodes.

In the illustration of Figure 7a, a point in time is shown where the first conveying electrode in the succession of the conveying electrodes is supplied with a radio frequency AC voltage having a phase 31.1 of 0°. The radio frequency AC voltage supplied to the second conveying electrode in the succession at that particular point in time has a phase 31.2 decreased by 120° as compared to the phase of the radio frequency AC voltage supplied to the first conveying electrode which results in a phase 31.2 of 240° for the second conveying electrode. The third conveying electrode in the succession is supplied with a radio frequency AC voltage having at the particular point in time a phase 31.3 which is decreased by another 120° as compared to the phase of the radio frequency AC voltage supplied to the second conveying electrode which thus results in a phase 31.3 of 120° for the third conveying electrode.

The illustration of Figure 7b shows a later point in time where the radio frequency AC voltages have passed a phase change of 20° as compared to the illustration of Figure 7a. Thus, at the first conveying electrode, the phase 31.1 of the radio frequency AC voltage is now at 20°, while at the second conveying electrode, the phase 31.2 is at 260°, while at the third conveying electrode, the phase 31.3 is now at 140°. As a result, the radio frequency AC potential wave 30 is slightly moved in the conveying direction 20 as compared to Figure 7a.

The illustration of Figure 7c shows yet a later point in time where the radio frequency AC voltages have passed another phase change of 20°. Thus, at the first conveying electrode, the phase 31.1 of the radio frequency AC voltage is now at 40°, while at the second conveying electrode, the phase 31.2 is at 280°, while at the third conveying electrode, the phase 31.3 is now at 160°. As a result, the radio frequency AC potential wave 30 is slightly moved further in the conveying direction 20.

Figure 2 shows a schematic view of a cross section of a second ion guide assembly 101 according to the invention for conveying ions along a conveying path 10 in a conveying direction 20. This second ion guide assembly 101 is in most parts identical to the first ion guide assembly 1 shown in Figure 1. However, in this second ion guide assembly 101, the low pressure chamber 107 surrounds the conveying path 10, but passes through the openings of the annular shaped conveying electrodes 106.1, ..., 106.8. Furthermore, the conveying electrodes 106.1, ..., 106.8 are not separated by equal distances. Rather, the distance between two neighbouring conveying electrodes 106.1, ..., 106.8 increase along the succession of conveying electrodes 106.1, ..., 106.8. Additionally, the radio frequency AC voltage control circuitry is incorporated in the ion guide 102 and is thus not separately shown in Figure 2.

Even though the conveying electrodes 106.1, ..., 106.8 of the second ion guide assembly 101 are not equally distanced from each other, the conveying electrodes 106.1, ..., 106.8 are supplied with radio frequency AC voltages having for each two neighbouring conveying electrodes 106.1, ..., 106.8 a phase difference in angular units which is a distance between the respective two neighbouring conveying electrodes 106.1, ..., 106.8 in length units multiplied by a factor in units corresponding to the angular units divided by the length units, wherein the factor is the same for each two neighbouring conveying electrodes 106.1, ..., 106.8. Thus, the radio frequency AC potential wave provides uniformly a same wavelength along the conveying path 10.

In another embodiment however, the factor differs for each two neighbouring conveying electrodes 106.1, ..., 106.8 while the phase decreases by the same amount from one conveying electrode 106.1, ..., 106.7 to its neighbouring conveying electrode 106.2, ..., 106.8 along the succession of conveying electrodes 106.1, ..., 106.8. In this particular embodiment, the wave length of the radio frequency AC potential wave increases along the conveying path 10 in conveying direction 20.

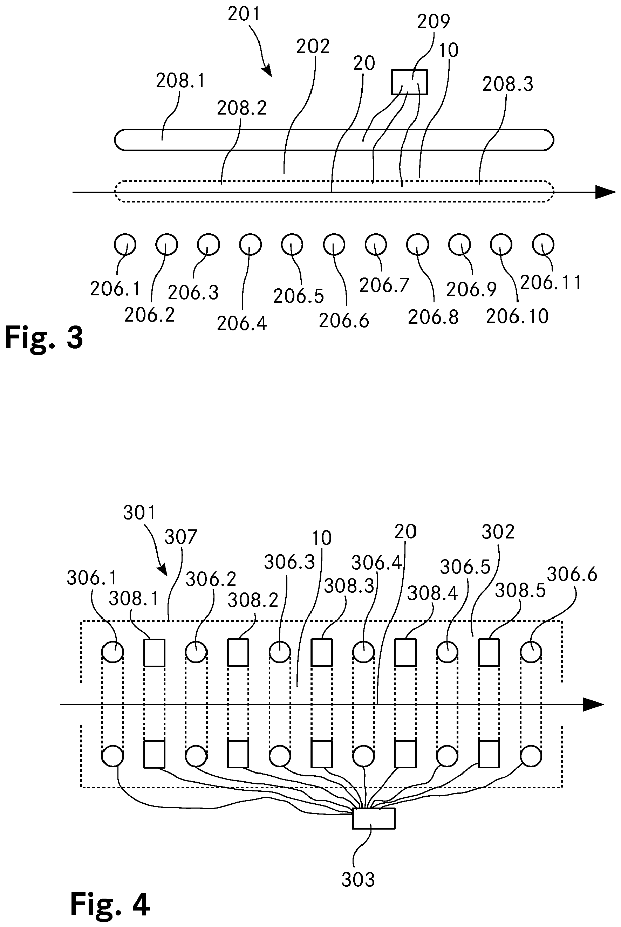

Figure 3 shows a schematic view of a cross section of a third ion guide assembly 201 according to the invention for conveying ions along a conveying path 10 in a conveying direction 20. This third ion guide assembly 201 is in most parts identical to the first ion guide assembly 1 shown in Figure 1. However, in this third ion guide assembly 201, the ion guide 202 does not comprise a low pressure chamber. Furthermore, the conveying electrodes 206.1, ..., 206.11 do not provide an annular shape but provide a rod-like shape. Similar to the second ion guide assembly 101 shown in Figure 2, the radio frequency AC voltage control circuitry is incorporated in the ion guide 202 and thus not shown separately in Figure 3.

In the representation of Figure 3, the conveying electrodes 206.1, ..., 206.11 are oriented perpendicular to the image plane of the figure. Thus, the conveying electrodes 206.1, ..., 206.11 are arranged in a plane which is oriented perpendicular to the image plane of the figure and parallel to the conveying path 10. In addition to the conveying electrodes 206.1, ..., 206.11, the ion guide 202 comprises three confining electrodes 208.1, 208.2, 208.3. These confining electrodes 208.1, 208.2, 208.3 have an elongate shape and extend parallel to the conveying path 10 along the conveying path 10. A first one of the confining electrodes 208.1 is arranged opposite of the conveying electrodes 206.1, ..., 206.11 with the conveying path 10 between the first one of the confining electrodes 208.1 and conveying electrodes 206.1, ..., 206.11. Similarly, a second one and a third one of the confining electrodes 208.2, 208.3 are arranged opposite of each other with the conveying path 10 in between. Thus, the confining electrodes 208.1, 208.2, 208.3 and the conveying electrodes 206.1, ..., 206.11 frame the conveying path 10 on four sides.

The third ion guide assembly 201 comprises additionally a confinement control circuitry 209 which is connected to the confining electrodes 208.1, 208.2, 208.3 for supplying the confining electrodes 208.1, 208.2, 208.3 with a DC voltage. Thus, the ions conveyed along the conveying path 10 in the conveying direction 20 are maintained on the conveying path 10 by the confinement electrodes 208.1, 208.2, 208.3. In a variant, the confining electrodes 208.1, 208.2, 208.3 are supplied with a radio frequency AC voltage by the confinement control circuitry 209 in order to maintain the ions conveyed along the conveying path 10 on the conveying path 10. Thereby, the frequency of the radio frequency AC voltage supplied to the confining electrodes 208.1, 208.2, 208.3 is in the same range as described above for the radio frequency AC voltages supplied to the conveying electrodes.

In another embodiment, the confinement control circuitry 209 is incorporated in the radio frequency AC voltage control circuitry. This can be the case independent of whether the radio frequency AC voltage control circuitry is incorporated in the ion guide 202 or not. In yet another embodiment, the confinement control circuitry 209 is incorporated in the ion guide 202, while the radio frequency AC voltage control circuitry is a unit separate of the ion guide 202.

Figure 4 shows a schematic view of a cross section of a fourth ion guide assembly 301 according to the invention for conveying ions along a conveying path 10 in a conveying direction 20. This fourth ion guide assembly 301 is in most parts identical to the first ion guide assembly 1 shown in Figure 1. However, in this fourth ion guide assembly 301, between each two neighbouring conveying electrodes 306.1, ..., 306.6, a confining electrode 308.1, ..., 308.5 is arranged. These confining electrodes 308.1, ..., 308.5 have an annular shape and the conveying path 10 passes through the opening in the confining electrodes 308.1, ..., 308.5.

In the fourth ion guide assembly 301, the confinement control circuitry is incorporated in the radio frequency AC voltage control circuitry 303. Thus, the confining electrodes 308.1, ..., 308.5 are connected to the radio frequency AC voltage control circuitry 303.

The confining electrodes 308.1, ..., 308.5 are supplied by the confinement control circuitry with a DC voltage in order to generate a repulsive potential for the ions. Due to the confining electrodes 308.1, ..., 308.5 providing the repulsive potential, the ions are more strongly confined to the conveying path 10. Therefore, the fourth ion guide assembly 301 can be used to convey ions along the conveying path 10 in the conveying direction 20 in a higher gas pressure like for example more than 10 mbar in the low pressure chamber 307. Consequently, the ion guide 302 is optimised to be operated in a higher gas pressure like for example a gas pressure of more than 10 mbar.

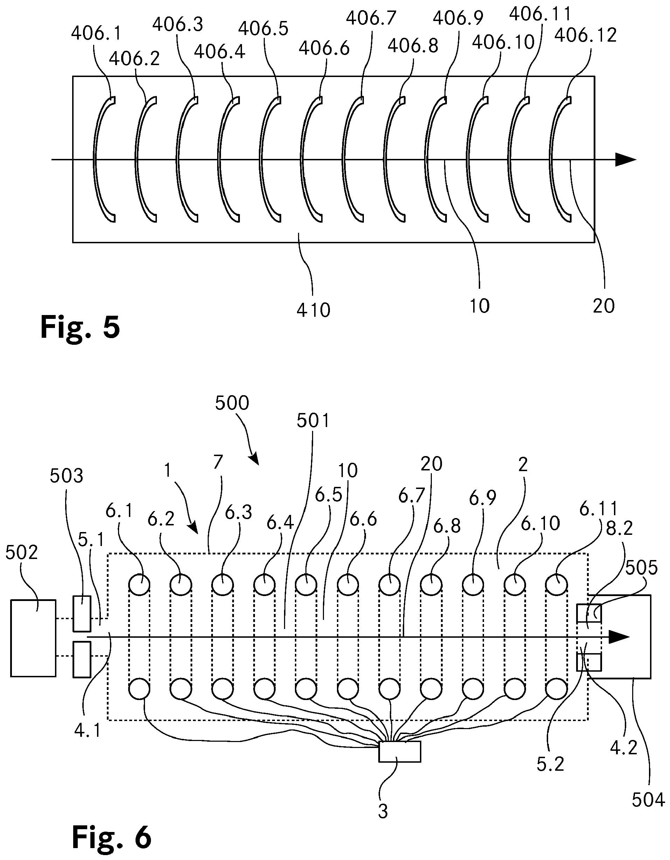

Figure 5 shows a schematic view of a succession of conveying electrodes 406.1, ..., 406.12. These conveying electrodes 406.1, ..., 406.12 are printed on a board 410. Thus, they are arranged in a plane. In the view shown in Figure 5, this plane is in the image plane.

The succession of conveying electrodes 406.1, ..., 406.12 shown in Figure 5 can be employed in an ion guide assembly according to the invention. For example, it can be employed in the third ion guide assembly 201 shown in Figure 3 and replace the conveying electrodes 206.1, ..., 206.11 shown in Figure 3. In this case, the conveying path 10 runs centrally over the succession of conveying electrodes 406.1, ..., 406.12 in the conveying direction 20 as indicated by the arrow in Figure 5.

Since the conveying electrodes 406.1, ..., 406.12 each provide a shape where within a central region of the respective conveying electrode 406.1, ..., 406.12, with increasing distance from the conveying path 10 measured perpendicular to a direction of the conveying path 10, the respective conveying electrode 406.1, ..., 406.12 reaches further into the conveying direction 20. Thereby, the shortest distance between the respective conveying electrode 406.1, ..., 406.12 and the conveying path 10 is measured from a point comprised by the central region.

Since within the central region of the respective conveying electrode 406.1, ..., 406.12, with increasing distance from the conveying path 10 measured perpendicular to the direction of the conveying path 10, the respective conveying electrode 406.1, ..., 406.12 reaches further into the conveying direction 20, the conveying electrodes 406.1, ..., 406.12 each provide a shape where within the central region of the respective conveying electrode 406.1, ..., 406.12, the further a point on a side of the respective conveying electrode 406.1, ..., 406.12 facing in the conveying direction 20 is distanced from the conveying path 10, the further ahead the respective point is in the conveying direction 20. Thereby, the side of the respective conveying electrode 406.1, ..., 406.12 facing in the conveying direction 20 refers to the sum of surface elements of the surface of the respective conveying electrode 406.1, ..., 406.12 having a normal vector pointing away from the respective conveying electrode 406.1, ..., 406.12 and being oriented in space at an angle of less than 80° with respect to the conveying direction 20. This includes normal vectors which are parallel to the conveying direction 20 and which are thus oriented at an angle of 0° with respect to the conveying direction 20.

As can be recognised from Figure 5, the conveying electrodes 406.1, ..., 406.12 are shaped such that nearly their entire side facing in the conveying direction 20 reaches with increasing distance from the conveying path 10 measured perpendicular to the direction of the conveying path 10 further into the conveying direction 20. Thus, for each conveying electrode 406.1, ..., 406.12, the central region covers more than 90% of the side of the respective conveying electrode 406.1, ..., 406.12 facing in the conveying direction 20.

In variants, the central region can cover different percentages of the side of the respective conveying electrode 406.1, ..., 406.12 facing in the conveying direction 20. For example, the central region can cover the entire side of the respective conveying electrode 406.1, ..., 406.12 facing in the conveying direction 20. In other examples, the central region covers 60%, 65%, 70%, 75%, 80%, 85% or 90% of the side of the respective conveying electrode 06.1, ..., 406.12 facing in the conveying direction 20.

Since within the central region of the respective conveying electrode 406.1, ..., 406.12, with increasing distance from the conveying path 10 measured perpendicular to the direction of the conveying path 10, the respective conveying electrode 406.1, ..., 406.12 reaches further into the conveying direction20, the ions are laterally focussed onto the conveying path 10 when being conveyed along the conveying path 10. Consequently, in case the succession of conveying electrodes 406.1, ..., 406.12 shown in Figure 5 is employed in an ion guide assembly 201 shown in Figure 3, the second and third confining electrode 208.2, 208.3 of the ion guide assembly 201 shown in Figure 3 are no longer required. Thus, such an embodiment of the ion guide assembly can go with only the first confining electrode 208.1 arranged opposite of the conveying electrodes 406.1, ..., 406.12.

In yet another embodiment, the ion guide of the ion guide assembly comprises two successions of conveying electrodes 406.1, ..., 406.12 as shown in Figure 5. In this case, the two successions of conveying electrodes 406.1, ..., 406.12 are arranged in two planes which are arranged parallel to each other, wherein the conveying path 10 is arranged between the two planes. In this case, both successions of conveying electrodes 406.1, ..., 406.12 can be operated as described above for the conveying electrodes. In this case, both successions count as successions of conveying electrodes. However, one of the successions of electrodes can be used and operated as a succession of confining electrodes as described above, while the second succession of electrodes is used and operated as described above for the conveying electrodes 406.1, ..., 406.12. In this case, one succession is to be considered as a succession of confining electrodes while the other succession is to be considered as a succession of conveying electrodes 406.1, ..., 406.12.

The invention is not limited to the embodiments described above. Many other embodiments, variants and variations are possible and readily available to the skilled in the art.

Figure 6 illustrates that an ion guide assembly according to the invention can be employed in an apparatus 500. For this illustration, the first ion guide assembly 1 from Figure 1 is shown as being employed in the apparatus 500. Instead of the first ion guide assembly 1, the second ion guide assembly 101, the third ion guide assembly 201, the fourth ion guide assembly 301 or any other ion guide assembly according to the invention can be employed in the apparatus 500.

The apparatus 500 shown in Figure 6 comprises an electrode arrangement 505 arranged the second spatial region 5.2 of the ion guide 2 for generating a potential in the second spatial region 5.2 of the ion guide 2 which is higher than a potential in the first spatial region 5.1 of the ion guide 2. In a variant however, the electrode arrangement 505 can also be arranged in the first spatial region 5.1 of the ion guide 2 for generating a potential in the first spatial region 5.1 of the ion guide 2 which is lower than the potential in the second spatial region 5.2 of the ion guide 2. Thus, in operation, in either variant, the ion guide assembly 1 is used to transport ions against a DC gradient.

Independent of whether the electrode arrangement 505 is arranged in the first spatial region 5.1 or in the second spatial region 5.2 of the ion guide 2, the electrode arrangement 500 can also be employed for generating a potential such that the potential experienced by the ions in the first spatial region 5.1 is higher than the potential experienced by the ions in the second spatial region 5.2. In yet another variant, the apparatus 500 can also go without such an electrode arrangement.

Independent of whether the apparatus 500 comprises such an electrode arrangement or not, the apparatus 500 shown in Figure 6 is an ion mobility spectrometer comprising an ion separation region 501, wherein the ion guide assembly according to the invention is used to convey the ions along the conveying path 10 in the conveying direction 20 through the ion separation region 501 for separating the ions according to their mobility.

The apparatus 500 shown in Figure 6 comprises an ion source 502 for generating ions. Furthermore, it comprises an ion gate 503 for controlling the introduction of the ions generated by the ion source 502 into the first ion guide assembly 1 at the first end 4.1 of the ion guide 2 and thus into the ion separation region 501. Inside the low pressure chamber 7, a gas pressure of 20 mbar of a neutral gas is maintained. Thus, as the ions are conveyed by the ion guide assembly 1 along the conveying path 10 through the ion separation region 501, ions providing a larger cross section experience a larger resistance and thus take longer to pass the ion separation region 501 than ions providing a smaller cross section. After having passed the ion separation region 501, the ions exit the ion guide 2 through the outlet 8.2 at the second end 4.2 of the ion guide 2 and are detected by an ion detector 504. This ion detector 504 can be any ion detector. In one example, the ion detector 504 is a photomultiplier. In another example, the ion detector 504 is a Faraday detector. In yet another example, the ion detector 504 is a mass spectrometer.

The apparatus 500 shown in Figure 6 is shown in a schematic, simplified way in order to illustrate how an ion guide assembly according to the invention can be employed in an ion mobility spectrometer. Thus, several components of the apparatus 500 or ion mobility spectrometer, respectively, are not explicitly shown as they are well known in the art. For example, the control system for controlling the apparatus 500 is not shown. In one example, the apparatus 500 comprises a control unit for controlling the ion gate 503. Thereby, the ion gate 503 is controlled in such a way that packets of ions are inserted into the ion guide 2 and thus into the ion separation region 501. The ion detector 504 provides a time dependent signal representing when what number of ions have been detected by the ion detector 504. By knowing the time when the ions have passed the ion gate 503 and entered the ion separation region 501, the time the ions required to pass the ion separation region 501 can be determined. From the gas pressure in the ion separation region 501 and the time the ions required to pass the ion separation region 501, the mobility of the ions can be determined and be represented in an ion mobility spectrum as known in the art.

There are different ways the apparatus 500 or ion mobility spectrometer, respectively, can be operated. For example, a multiplexing like described in WO 2013/059947 can be employed.

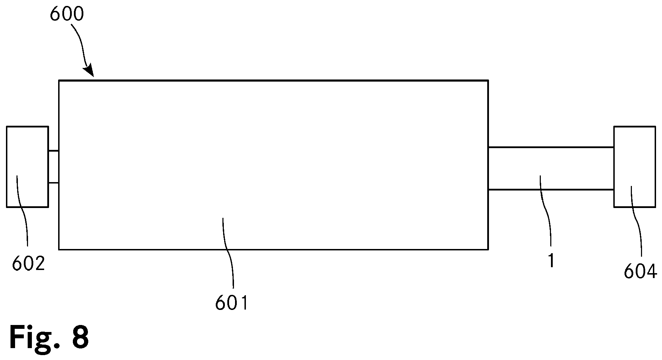

Figure 8 shows a schematic view of another apparatus 600 comprising an ion guide assembly according to the invention. Thereby, the apparatus 600 is shown with the ion guide assembly 1 from Figure 1 for illustration purposes. However, the apparatus 600 can be employed with any ion guide assembly according to the invention.

The apparatus 600 is an ion mobility spectrometer and comprises an ion source 602, an ion separation region 601 and an ion detector 604. In contrast to the apparatus 500 shown in Figure 6, in the apparatus 600 shown in Figure 8, the ion guide assembly 1 is used to convey the ions along the conveying path in the conveying direction from the ion separation region 601 to the ion detector 604. In this embodiment, the ions are pulled through the ion separation region 601 as known in the art with a DC electric field in order to separate the ions according to their mobility. The first end of the ion guide of the ion guide assembly 1 is arranged at the end of the ion separation region 601 while the second end of the ion guide of the ion guide assembly 1 is arranged at the ion detector 604 such that the first spatial region of the ion guide of the ion guide assembly 1 is arranged at the end of the ion separation region 601 while the second spatial region of the ion guide of the ion guide assembly 2 is arranged at the ion detector 604. Thus, the ions which have reached the end of the separation region 601 are conveyed by the ion guide assembly 1 to the ion detector 604.

In a variant however, the first end of the ion guide of the ion guide assembly 1 is arranged at the beginning of the ion separation region 601 such that the first spatial region of the ion guide of the ion guide assembly 1 is arranged at the beginning of the ion separation region 601. In this variant, the ion guide assembly 1 is not only used to convey the ions from the ion separation region 601 to the ion detector but also for conveying the ions through the ion separation region 601 for separating the ions according to their mobility.

In yet another variant, the apparatus 600 comprises two ion guide assemblies according to the invention. In this case, one ion guide assembly is used for conveying the ions through the ion separation region 601 for separation the ions according to their mobility as illustrated in Figure 6, while the second ion guide assembly is used for conveying the ions form the end of the ion separation region 601 to the detector 604 as illustrated in Figure 8.

The use of an ion guide assembly according to the invention is not limited to ion mobility spectrometers as illustrated in Figure 6. Ion guide assemblies according to the invention can be used wherever ions are to be conveyed over a distance. For example, the ion guide assembly according to the invention can be employed in an aerosol mobility spectrometer, where the aerosols are vaporised and ionised at the end and conveyed to an ion detector which can for example be an ion mobility spectrometer, a mass spectrometer or any other ion detection unit. In other examples, ion guide assemblies according to the invention can be used to transport ions from an environment with a higher gas pressure to an environment with a lower gas pressure or from an environment with a lower gas pressure to an environment with a higher gas pressure.

In summary, it is to be noted that an ion guide assembly and a method for operating the ion guide assembly are provided that enable to convey ions more efficiently and reliably along a conveying path in a conveying direction.

## Claims

1. An ion guide assembly (1, 101, 201, 301) for conveying ions along a conveying path (10) in a conveying direction (20), comprising:
a) an ion guide (2, 102, 202, 302) having a first end (4.1) and a second end (4.2) being spatially separated from said first end (4.2), for conveying said ions along said conveying path (10) from a first spatial region (5.1) located in an area of said first end (4.1) of said ion guide (2, 102, 202, 302) to a second spatial region (5.2) located in an area of said second end (4.2) of said ion guide (2, 102, 202, 302), wherein said second spatial region (5.1) is spatially separated from said first spatial region (5.1), wherein said ion guide (2, 102, 202, 302) comprises at least three conveying electrodes (6.1, ..., 6.11, 106.1, ..., 106.8, 206.1, ..., 206.11, 306.1, ..., 306.6, 406.1, ... 406.12) arranged in a succession of each other along said conveying path (10); and
b) a radio frequency AC voltage control circuitry (3, 303) connectable to said at least three conveying electrodes (6.1, ..., 6.11, 106.1, ..., 106.8, 206.1, ..., 206.11, 306.1, ..., 306.6, 406.1, ... 406.12) for supplying each of said at least three conveying electrodes (6.1, ..., 6.11, 106.1, ..., 106.8, 206.1, ..., 206.11, 306.1, ..., 306.6, 406.1, ... 406.12) with a radio frequency AC voltage, wherein for each one of said at least three conveying electrodes (6.2, ..., 6.11, 106.2, ..., 106.8, 206.2, ..., 206.11, 306.2, ..., 306.6, 406.2, ... 406.12) which is succeeding in said succession of said at least three conveying electrodes (6.1, ..., 6.11, 106.1, ..., 106.8, 206.1, ..., 206.11, 306.1, ..., 306.6, 406.1, ... 406.12) a preceding neighbouring conveying electrode (6.1, ..., 6.10, 106.1, ..., 106.7, 206.1, ..., 206.10, 306.1, ..., 306.5, 406.1, ... 406.11) of said at least three conveying electrodes (6.1, ..., 6.11, 106.1, ..., 106.8, 206.1, ..., 206.11, 306.1, ..., 306.6, 406.1, ... 406.12), said radio frequency AC voltage has essentially a same frequency, essentially a same maximum amplitude and a phase 31.2, 31.3 decreased by an amount in a range from 10° to 170° as compared to for the respective preceding neighbouring conveying electrode (6.1, ..., 6.10, 106.1, ..., 106.7, 206.1, ..., 206.10, 306.1, ..., 306.5, 406.1, ... 406.11) for generating a radio frequency AC potential wave (30) along said conveying path (10) moving in said conveying direction (20) for conveying said ions along said conveying path (10) in said conveying direction (20).

2. The ion guide assembly (1, 101, 201, 301) according to claim 1, **characterised in that** said radio frequency AC voltage control circuitry (3, 303) is connected to said at least three conveying electrodes (6.1, ..., 6.11, 106.1, ..., 106.8, 206.1, ..., 206.11, 306.1, ..., 306.6, 406.1, ... 406.12) for supplying each of said at least three conveying electrodes (6.1, ..., 6.11, 106.1, ..., 106.8, 206.1, ..., 206.11, 306.1, ..., 306.6, 406.1, ... 406.12) with said radio frequency AC voltage, wherein for each one of said at least three conveying electrodes (6.2, ..., 6.11, 106.2, ..., 106.8, 206.2, ..., 206.1 1, 306.2, ..., 306.6, 406.2, ... 406.12) which is succeeding in said succession of said at least three conveying electrodes (6.1, ..., 6.11, 106.1, ..., 106.8, 206.1, ..., 206.11, 306.1, ..., 306.6, 406.1, ... 406.12) a preceding neighbouring conveying electrode (6.1, ..., 6.10, 106.1, ..., 106.7, 206.1, ..., 206.10, 306.1, ..., 306.5, 406.1, ... 406.11) of said at least three conveying electrodes (6.1, ..., 6.11, 106.1, ..., 106.8, 206.1, ..., 206.11, 306.1, ..., 306.6, 406.1, ... 406.12), said radio frequency AC voltage has essentially a same frequency, essentially a same maximum amplitude and a phase 31.2, 31.3 decreased by an amount in a range from 10° to 170° as compared to for the respective preceding neighbouring conveying electrode (6.1, ..., 6.10, 106.1, ..., 106.7, 206.1, ..., 206.10, 306.1, ..., 306.5, 406.1, ... 406.11) for generating a radio frequency AC potential wave (30) along said conveying path (10) moving in said conveying direction (20) for conveying said ions along said conveying path (10) in said conveying direction (20).

3. The ion guide assembly (1, 101, 301) according to claim 1 or 2, **characterised by** a low pressure chamber (7, 107, 307) for operating said ion guide (2, 102, 302) in a gas pressure in a range from 0.01 mbar to 1 bar, from 0.01 mbar to 100 mbar or from 0.01 mbar to 10 mbar, preferably 0.1 mbar to 1 bar, from 0.1 mbar to 100 mbar or from 0.1 mbar to 10 mbar, particular preferably from 1 mbar to 1 bar, from 1 mbar to 100 mbar or from 1 mbar to 10 mbar.

4. The ion guide assembly (1, 101, 201, 301) according to one of claims 1 to 3, **characterised in that** said radio frequency AC voltage control circuitry (3, 303) is connectable or connected to said at least three conveying electrodes (6.1, ..., 6.11, 106.1, ..., 106.8, 206.1, ..., 206.11, 306.1, ..., 306.6, 406.1, ... 406.12) for supplying said at least three conveying electrodes (6.1, ..., 6.11, 106.1, ..., 106.8, 206.1, ..., 206.11, 306.1, ..., 306.6, 406.1, ... 406.12) with radio frequency AC voltages having for each two neighbouring conveying electrodes (6.1, ..., 6.11, 106.1, ..., 106.8, 206.1, ..., 206.11, 306.1, ..., 306.6, 406.1, ... 406.12) of said at least three conveying electrodes (6.1, ..., 6.11, 106.1, ..., 106.8, 206.1, ..., 206.11, 306.1, ..., 306.6, 406.1, ... 406.12) a phase difference in angular units which is a distance between the respective two neighbouring conveying electrodes (6.1, ..., 6.11, 106.1, ..., 106.8, 206.1, ..., 206.11, 306.1, ..., 306.6, 406.1, ... 406.12) in length units multiplied by a factor in units corresponding to said angular units divided by said length units, wherein said factor is the same for each two neighbouring conveying electrodes (6.1, ..., 6.11, 106.1, ..., 106.8, 206.1, ..., 206.11, 306.1, ..., 306.6, 406.1, ... 406.12) of said at least three conveying electrodes (6.1, ..6.11, 106.1, ..., 106.8, 206.1, ..., 206.11, 306.1, ..., 306.6, 406.1, ... 406.12).

5. The ion guide assembly (201, 301) according to one of claims 1 to 4, **characterised in that** said ion guide (202, 302) comprises at least one confining electrode (208.1, 208.2, 208.3, 308.1, ..., 308.5) for applying an electric field for confining said ions on said conveying path (10) when being conveyed along said conveying path (10).

6. The ion guide assembly (201, 301) according to claim 5, **characterised in that** said ion guide assembly (201, 301) comprises a confinement control circuitry (209) connectable to said at least one confining electrode (208.1, 208.2, 208.3, 308.1, ..., 308.5) for supplying said at least one confining electrode (208.1, 208.2, 208.3, 308.1, ..., 308.5) with a radio frequency AC voltage or with a DC voltage.

7. The ion guide assembly (201) according to one of claims 1 to 6, **characterised in that** said at least three conveying electrodes (206.1, ..., 206.11, 406.1, ... 406.12) are arranged in a plane.

8. The ion guide assembly according to one of claims 1 to 7, **characterised in that** at least two of said at least three conveying electrodes (406.1, ..., 406.12) each provide a shape where within a central region of the respective conveying electrode (406.1, ..., 406.12), with increasing distance from said conveying path (10) measured perpendicular to a direction of said conveying path (10), the respective conveying electrode (406.1, ..., 406.12) reaches further into said conveying direction (20).

9. An apparatus (500, 600) comprising an ion guide assembly (1, 101, 201, 301) according to one of claims 1 to 8 or conveying ions along said conveying path (10).

10. The apparatus (500, 600) according to claim 9, **characterised in that** said apparatus (500, 600) comprises an electrode arrangement (505) arranged in one of said first spatial region (5.1) and said second spatial region (5.2) of said ion guide (2, 102, 202, 302) for generating a potential in the respective one of said first spatial region (5.1) and said second spatial region (5.2) of said ion guide (2, 102, 202, 302) which is different to a potential in the other one of said first spatial region (5.1) and said second spatial region (5.2) of said ion guide (2, 102, 202, 302).

11. The apparatus (500, 600) according to claim 10, **characterised in that** for said ions to be conveyed by said ion guide assembly (1, 101, 201, 301), said potential in said second spatial region (5.2) is higher than said potential in said first spatial region (5.1) of said ion guide (2, 102, 202, 302).

12. The apparatus (500, 600) according to one of claims 9 to 11, **characterised in that** said apparatus (500, 600) is an ion mobility spectrometer and comprises an ion detector for detecting the ions.

13. Apparatus (500, 600) according to claim 12, **characterised by** an ion separation region (501, 601), wherein said ion guide assembly (1, 101, 201, 301) is arranged for conveying ions along said conveying path (10) through said ion separation region (501, 601) for separating said ions according to their mobility.

14. A method for operating the ion guide assembly (1, 101, 201, 301) according to one of claims 1 to 8, **characterised in that** radio frequency AC voltages are supplied by said radio frequency AC voltage control circuitry (3, 303) to each of said at least three conveying electrodes (6.1, ..., 6.11, 106.1, ..., 106.8, 206.1, ..., 206.11, 306.1, ..., 306.6, 406.1, ... 406.12), wherein for each one of said at least three conveying electrodes (6.2, ..., 6.11, 106.2, ..., 106.8, 206.2, ..., 206.11, 306.2, ..., 306.6, 406.2, ... 406.12) which is succeeding in said succession of said at least three conveying electrodes (6.1, ..., 6.11, 106.1, ..., 106.8, 206.1, ..., 206.11, 306.1, ..., 306.6, 406.1, ... 406.12) a preceding neighbouring conveying electrode (6.1, ..., 6.10, 106.1, ..., 106.7, 206.1, ..., 206.10, 306.1, ..., 306.5, 406.1, ... 406.11) of said at least three conveying electrodes (6.1, ..., 6.11, 106.1, ..., 106.8, 206.1, ..., 206.11, 306.1, ..., 306.6, 406.1, ... 406.12), said radio frequency AC voltage has essentially a same frequency, essentially a same maximum amplitude and a phase 31.2, 31.3 decreased by an amount in a range from 10° to 170° as compared to said radio frequency AC voltage supplied to the respective preceding neighbouring conveying electrode (6.1, ..., 6.10, 106.1, ..., 106.7, 206.1, ..., 206.10, 306.1, ..., 306.5, 406.1, ... 406.11) for generating a radio frequency AC potential wave (30) along said conveying path (10) moving in said conveying direction (20) for conveying said ions along said conveying path (10) in said conveying direction (20).

15. The method according to claim 14, **characterised in that** ion guide (2, 201, 202, 302) is operated in a gas pressure in a range from 0.01 mbar to 1 bar, from 0.01 mbar to 100 mbar or from 0.01 mbar to 10 mbar, preferably 0.1 mbar to 1 bar, from 0.1 mbar to 100 mbar or from 0.1 mbar to 10 mbar, particular preferably from 1 mbar to 1 bar, from 1 mbar to 100 mbar or from 1 mbar to 10 mbar.

16. A method for operating an apparatus (500, 600) according to claim 13, **characterised in that** ions are conveyed along the conveying path (10) in conveying direction (20) by operating the ion guide assembly (1, 101, 201, 301) according to one of claims 1 to 12 with the method according to claim 14 or 15 through the ion separation region (501, 601) of the apparatus (500, 600) for separating the ions according to their mobility.
